Europäisches Patentamt

European Patent Office

Office européen des brevets

(11) Numéro de publication: **0 404 696**

**A1**

## (12) DEMANDE DE BREVET EUROPEEN

(21) Numéro de dépôt: 90420273.6

(22) Date de dépôt: 07.06.90

(51) Int. Cl.5: **C08K 3/08, C08L 21/00, C09D 5/10**

(30) Priorité: **19.06.89 FR 8908732**

(43) Date de publication de la demande:
**27.12.90 Bulletin 90/52**

(84) Etats contractants désignés:
**AT BE CH DE DK ES FR GB GR IT LI LU NL SE**

(71) Demandeur: **ANTIROUILLE**
**6 rue de Méric**
**F-57011 Metz(FR)**

(72) Inventeur: **Duret, Robert, 34 Chemin des Pierres Blanches**
**Lotissement des Pierres Blanches**
**F-69126 Brindas(FR)**
Inventeur: **Trinh, Cuong**
**20 B Montée de la Soeur Vially**
**F-69300 Caluire(FR)**
Inventeur: **Finaz, Gilles**
**70 Rue Vendôme**
**F-69006 Lyon(FR)**
Inventeur: **Vittori, Olivier**
**47 rue du Tonkin**
**F-69100 Villeurbanne(FR)**

(74) Mandataire: **Guerre, Dominique et al**
**CABINET GERMAIN et MAUREAU Le**
**Britannia Tour C 20 Bd E. Deruelle**
**F-69392 Lyon Cédex 03(FR)**

(54) **Appareil destiné à contenir de l'acide fluorhydrique, avec une paroi métallique revêtue par un matériau de protection.**

(57) La présente invention concerne la protection contre l'action corrosive de l'acide fluorhydrique.

Selon l'invention, on a découvert qu'un matériau constitué par un substrat ou matrice élastomère, et une charge de particules métalliques dispersées dans le substrat, d'un métal oxydable par l'acide fluorhydrique ionisé, peut limiter ou empêcher la diffusion de l'acide fluorhydrique.

Les matériaux selon l'invention peuvent être utilisés sous toutes les formes appropriées notamment en feuilles, pour la protection de parois métalliques.

# APPAREIL DESTINE A CONTENIR DE L'ACIDE FLUORHYDRIQUE, AVEC UNE PAROI METALLIQUE REVE-TUE PAR UN MATERIAU DE PROTECTION

La présente invention concerne la protection contre l'acide fluorhydrique, et elle a trait plus particulièrement à divers appareils destinés à contenir de l'acide fluorhydrique, et comportant une paroi métallique revêtue d'un matériau de protection contre la corrosion chimique de l'acide fluorhydrique.

L'acide fluorhydrique est connu dans le commerce sous différentes formes, ayant des pouvoirs corrosifs respectivement différents, vis-à-vis des matériaux constitutifs des parois des appareils destinés à le contenir.

L'acide fluorhydrique anhydre est inerte vis-à-vis de l'acier ordinaire, si bien que le problème de la protection des parois métalliques ne se pose pas, pour autant que l'on interdise à l'humidité même sous forme de trace, de s'introduire dans l'appareil.

L'acide fluorhydrique dénommé "70 % purifié" contient de l'acide sufurique afin d'inhiber la corrosion de l'acier. Des tests ont montré en effet que l'addition de 3 % d'acide sulfurique permet la conservation et la manipulation des solutions d'acide fluorhydrique au contact de l'acier ordinaire, à une concentration égale ou supérieure à 70 %. La présence de l'inhibiteur (acide sulfurique) dans l'acide fluorhydrique, à cette concentration relativement importante, est tolérée pour certains emplois, par exemple, pour le dépolissage du verre et pour la gravure sur porcelaine et céramique. Par contre, pour des emplois économiquement très importants tels que la préparation des fluorures minéraux, notamment d'uranium, la séparation des terres rares et la fabrication de composants électroniques, la présence de l'acide sulfurique pour inhiber la corrosion est inacceptable.

Les acides fluorhydriques dits "70 % cristal" et "50 % cristal" contiennent essentiellement de l'acide fluorhydrique ionisé, à des concentrations de 70 % et 50 % en poids respectivement. Ces deux présentations sont garanties contenir moins de 0,03 % d'acide sulfurique. A cette teneur, il n'y a plus d'effet inhibiteur et l'on constate l'extrême agressivité de l'acide fluorhydrique vis-à-vis des métaux, excepté le platine, l'or, l'argent et le mercure, métaux qui ne peuvent être retenus pour constituer une paroi métallique. De même, la plupart des alliages dits inoxydables sont rapidement attaqués par ces deux solutions d'acide fluorhydrique, de sorte que l'industrie chimique est contrainte d'employer uniquement des alliages anticorrosion de coût très élevé, et de mise en oeuvre délicate, tels que les alliages connus sous les noms de:
- chlorinet 2, de composition 63 Ni, 32 Mo, 3 Fe, 1 Si
- chlorinet 3, de composition 60 Ni, 18 Mo, 18 Cr, 1 Si
ainsi que certains alliages Monel à base de Nickel et de Cuivre, dopés avec d'autres éléments. On observe que même avec ces alliages nobles, des cations de métaux lourds de ces alliages passent dans les solutions d'acide fluorhydrique, et agissent ultérieurement comme polluants dans les procédés où les acides de qualité "Cristal" sont utilisés.

Conformément au document suivant : ULLMANNS ENCYKLOPADIE DER TECHNISCHEN CHEMIE, Vol.11, 1976, page 602, Verlag Chemie, Weinheim, DE, afin de protéger une paroi métallique contre l'effet corrosif de l'acide fluorhydrique sous forme ionisée, il est connu de revêtir cette paroi avec un matériau élastomère, par exemple sous forme de feuille, auto-vulcanisant, prévulcanisé, ou vulcanisant à la pression de la vapeur d'eau, ou à l'air sec chauffé. Ces matériaux élastomeres présentent en effet une certaine inertie chimique vis-à-vis de l'acide fluorhydrique, et peuvent éviter la pollution de la charge d'acide fluorhydrique par les cations des métaux lourds de la paroi métallique.

Cependant, la Demanderesse a constaté qu'une telle protection était insuffisante, en particulier en présence de quantités importantes d'acide fluorhydrique des qualités dites "Cristal". En effet, des vapeurs acides parviennent à migrer au travers du revêtement élastomère, vers la paroi métallique, et à corroder cette dernière, avec un dégagement gazeux faisant "cloquer" le revêtement, et pouvant l'endommager définitivement.

La présente invention a pour objet un appareil tel qu'envisagé précédemment, comportant une paroi métallique revêtue sur sa face interne par un matériau de protection, dont le substrat est constitué par au moins une matière élastomère, et qui s'oppose intrinsèquement à la migration de l'acide fluorhydrique dans son épaisseur.

Selon la présente invention, de manière surprenante, on a trouvé qu'une telle barrière pouvait être obtenue, en dispersant et distribuant dans le substrat élastomère des particules d'au moins un métal oxydable par l'acide fluorhydrique ionisé.

Bien entendu, selon la présente invention, plusieurs métaux différents peuvent être dispersés dans la matière élastomère.

Par "appareil", au sens de la présente invention, il faut comprendre tout dispositif, système, ou objet destine à contenir de l'acide fluorhydrique, comportant une paroi métallique au contact de ce dernier. Dans cette acception, on retiendra les réservoirs de stockage, les conduites de transport, les réacteurs chimiques, les appareillages de manutention, les dispositifs d'utilisation, etc..., sans que cette liste soit évidemment limitative.

Par "matériau", au sens de la présente invention, il faut comprendre toutes formes de présentation, telles que feuilles, mastics, joints, enduits, etc..., pouvant être choisies ou retenues selon les utilisations et applications. Et comme déjà dit, ces formes peuvent être déjà vulcanisées, auto-vulcanisantes, prévulcanisantes, ou vulcanisantes à la pression de la vapeur d'eau, ou à l'air sec chauffé.

Conformément au document FR-A-2 024359, on a déjà décrit une matière élastomère chargée par une poudre métallique, distribuée et dispersée dans le substrat, et dont la nature est choisie parmi les métaux Cu, Zn, Sn, Al, Cr, Mg et Ti, ou des alliages tels que laiton, bronze et acier. Mais cette poudre a pour rôle ou fonction de renforcer la matière élastomère, et d'améliorer ses propriétés mécaniques. Et la nouvelle fonction, mise en évidence selon la présente invention, à savoir former une barrière effective vis-à-vis de l'acide fluorhydrique, n'est ni décrite, ni suggérée dans le document FR-A-2 024359.

La présente invention est maintenant décrite par référence aux différentes expériences exposées ci-après.

S'agissant des matières élastomères pouvant être utilisées selon la présente invention, on a préférentiellement retenu les famille de produits suivants, sélectionnées par des tests traditionnels d'immersion d'une éprouvette dans des solutions d'acide fluorhydrique à des concentrations croissantes jusqu'à 70 % :
- les caoutchoucs butyl qui sont des copolymères de l'isobutylène avec une petite quantité d'isoprène, afin de permettre la vulcanisation par les mêmes procédés que le caoutchouc naturel ; les caoutchoucs halobutyls qui sont une variété similaire au butyl, dont ils diffèrent uniquement par la présence de sites additionnels de réticulation obtenus par substitution d'atomes d'hydrogène par le chlore ou par le brome ; les chlorobutyls et bronobutyls ont une inertie satisfaisante vis-à-vis des solutions d'acide fluorhydrique et celle-ci est similaire à celle des butyls ;
- les caoutchoucs de polyéthylène chlorosulfoné, tels que commercialisés sous la marque Hypalon (Du Pont) ;
- les caoutchoucs chlorés qui contiennent jusqu'à 60 % de chlore.

Pour confirmer l'aptitude des élastomères sélectionnés, comme précédemment à résister dans le temps à l'action corrosive de l'acide fluorhydrique, on a ensuite procédé à des tests de vieillissement accéléré.

Des plaques en acier ont été revêtues, selon la technique habituelle, avec des feuilles des élastomères sélectionnés. Préalablement ues revêtues ont été soumises à un cycle de vulcanisation sous pression de vapeur en autoclave, caractérisé par :
- une montée régulière en température jusqu'à 100° C à la vitesse de 1,5 degré par minute ;
- le maintien à 100° C pendant 60 minutes ;
- une nouvelle montée régulière en température par admission de vapeur, jusqu'à 125° C à la vitesse de 0,5° par minute ;
- le maintien à 125° C sous une pression de vapeur de 2,3 bar pendant 180 minutes ;
- le refroidissement rapide par détente de la vapeur.

Les tests de vieillissement accéléré sur les plaques revêtues ont consisté à immerger un premier lot de ces plaques dans des solutions d'acide fluorhydrique de concentration croissante jusqu'à la concentration de 70 %, à une température de 50° C, et à soumettre un deuxième lot identique, aux vapeurs surmontant les mêmes solutions dans des enceintes en polytetraflurothylène thermostatées à 50° C. Les plaques revêtues ont été régulièrement inspectées.

Avec les caoutchoucs butyls, on a constaté l'apparition de cloques à partir de 60 jours d'immersion dans la solution HF 70 % cristal. Avec les autres élastomères, à savoir caoutchoucs de polyéthylène chlorosulfoné et caoutchoucs chlorés, les cloques se manifestent plus rapidement à cette concentration, et on les considère donc comme moins résistants.

Pour les concentrations inférieures à 70 %, l'apparition des cloques demande plus de temps, jusqu'à la concentration de 38 % qui correspond à la composition azéotropique de l'acide fluorhydrique avec l'eau, et en-dessous de laquelle les caoutchoucs butyls restent adhérents sur le support métallique pendant une exposition supérieure à 250 jours.

L'étude des détériorations a montré que de l'acide fluorhydrique a traversé les caoutchoucs, puis a attaqué l'acier de la paroi métallique, avec dégagement d'hydrogène et formation de fluorures. Cependant, les feuilles butyl n'ont pas été altérées, contrairement à ce que l'on observe dans la pratique lorsque les supports métalliques ne sont pas convenablement protégés.

Par conséquent, à ce stade de l'expérimentation, les élastomères retenus, et en particulier les caoutchoucs butyl, quoique résistant bien chimiquement à l'acide fluorhydrique, se révèlent incapables de former une barrière efficace à ce dernier à des fortes concentrations.

C'est alors qu'intervient la distribution et dispersion dans le substrat ou matrice de l'élastomère, de particules d'un métal oxydable par l'acide fluorhydrique ionisé.

S'agissant des metaux pouvant être utilisés selon l'invention, on peut retenir selon l'invention les modes d'exécution suivants.

Les métaux préférés de l'invention sont caractérisés par un numéro atomique supérieur à 21 et inférieur à 83. On les définit également par leur position dans le tableau périodique des éléments, et les métaux qui conviennent plus particulièrement à la réalisation de l'invention sont rangés dans les périodes 4, 5 et 6. Ce sont :

- dans la période 4 : le titane, le vanadium, le chrome, le manganèse, le fer, le colbat, le nickel, le cuivre, et le zinc.

- dans la période 5 : le zirconium, le molybdène, le cadmium et l'étain.

- dans la période 6 : le thallium et le plomb.

Par le protocole expérimental décrit ci-après, on a déterminé que les meilleurs résultats sont obtenus lorsque les métaux sont dispersés sous une forme fine et régulière à l'intérieur de la matrice élastomère. Pour y parvenir, d'une part on utilise des poudres fines dont la granulométrie est de préférence inférieure à 100 micromètres, et d'autre part, on soumet le mélange d'élastomère et de poudre de métal à un intense travail mécanique à l'aide des machines de mélangeage employées pour la mise en oeuvre des mélanges à base de caoutchouc, par exemple un mélangeur du type Banbury.

De préférence, on emploie une quantité importante de poudre métallique par rapport au poids d'élastomère ; à titre indicatif, on retiendra des rapports pondéraux métal/élastomère compris entre 0,1 et 1.

Dans une première étape, l'efficacité des matériaux selon l'invention, c'est-à-dire chargés avec une poudre métallique oxydable par l'acide fluorhydrique, a d'abord été testée par des mesures de diffusion, effectuées de manière comparative par rapport aux seuls matériaux élastomères retenus comme précédemment.

A cette fin, on a utilisé un appareillage constitué de deux tubes en polytétrafluoréthylène de forme coudée, et assemblés en U par un équipement avec brides et collets. On a disposé entre les collets un disque poreux sur lequel ont été placées successivement les feuilles des matériaux à tester. On a rempli l'une des branches verticales du montage en U avec une solution HF 70 % cristal, et l'autre avec de l'eau distillée. L'ensemble a été immergé dans un bac thermostaté à 45° C. Au-dessus de la solution HF, on a exercé pendant la durée des tests une pression relative de 1 bar, et on a en continu le pH de l'eau distillée contenue dans l'autre branche.

Pour un matériau élastomère donné, tous les essais effectués ont montré que :

- le seul matériau élastomère conduisait à une diminution du pH dans la branche du tube en U contenant l'eau distillée ; il y a donc migration de l'acide fluorhydrique à travers le matériau ;

- le même matériau élastomère chargé en particules métalliques conduisait à une stabilité du pH dans la branche du tube en U contenant l'eau distillée ; la migration à travers le matériau apparaît donc très limitée, voire nulle.

Cette propriété apparaît totalement inattendue, car pour bloquer la diffusion, on pouvait penser qu'il était nécessaire de plaquer sur au moins une face de la feuille élastomère une couche continue d'un métal ou d'un alliage non oxydable par l'acide fluorhydrique ionisé, c'est-à-dire d'un métal précieux ou d'un alliage noble comme dit précédemment.

A postériori, on a recherché une explication à cette propriété tout à fait particulière. On peut émettre l'hypothèse que l'acide fluorhydrique qui diffuse dans l'élastomere, soit sous la forme moléculaire, soit sous la forme d'hydrates de stabilités très variables, réagit à la surface des particules métalliques en donnant des cations de metaux lourds. Ces cations ont vraisemblablement une faible mobilité à l'intérieur de la matière élastomérique, voire même une quasi-immobilité. Leur accumulation progressive dans le temps au niveau du front de diffusion de l'acide fluorhydrique formerait ainsi une barrière osmotique. Il s'agit seulement d'une hypothèse plausible, et si d'autres sortes d'explications devaient la remplacer ou l'infirmer, cela ne saurait en rien affecter le caractère totalement surprenant de la présente invention.

Dans une deuxième étape d'expérimentation, l'invention s'est intéressée à la mise en oeuvre de ces matériaux sur les parois métalliques de tout appareil destiné à contenir de l'acide fluorhydrique, notamment de qualité "cristal".

De manière générale, tous ces appareils peuvent être revêtus par une feuille d'un matériau selon l'invention. On obtient déjà à ce niveau de protection une barrière efficace contre la diffusion de l'acide fluorhydrique vers la paroi métallique de l'appareil.

On a cependant constaté qu'il est préférable d'intercaler entre la feuille d'un matériau selon l'invention et la paroi métallique en acier, une couche d'un élastomère éventuellement de même nature que l'élastomère du substrat ou matrice de la feuille selon l'invention. Une telle couche forme écran pour empêcher le contact direct de l'acier avec les particules métalliques, et éventuellement avec les cations qu'elles forment en s'oxydant sous l'action du front de diffusion fluorhydrique. Cette disposition n'est pas indispensable dans tous les cas, puisqu'elle dépend à la fois de l'épaisseur des feuilles vulcanisées selon l'invention, de la régularité de la dispersion des métaux, de leur vitesse d'oxydation par l'acide fluorhydrique, et enfin de la mobilité, bien que très faible, des cations de métaux lourds. Dans le choix de cette couche formant ecran vers la paroi métallique, on recherche en outre une très bonne adhérence, à la fois sur l'acier et sur la feuille élastomère, ainsi qu'une excellente cohésion de la matière.

Dans un mode préféré de l'invention, on utilise comme écran une autre feuille d'élastomère de nature similaire ou différente de celle constitutive de la feuille formant barrière selon l'invention, et lorsqu'on emploie la technique d'extrusion, il est particulièrement avantageux de coextruder, simultanément à travers une filière plate, la feuille et son écran, en utilisant des élastomères de même nature. On réalise ainsi une excellente liaison entre la feuille et son écran. Cependant, tous autres modes de fabrication et d'assemblage de feuilles, employés dans l'industrie de la transformation des élastomères conviennent également. On citera notamment l'extrusion et le calandrage des feuilles, suivi par leur assemblage par doublage à la calandre ou par contrecollage sur métier de complexage.

Toujours dans l'application d'une feuille d'un matériau selon l'invention, sur une paroi métallique, y compris avec une autre feuille formant écran, il convient de s'assurer que lesdites feuilles empêchent toute diffusion vers la charge d'acide fluorhydrique des cations des métaux lourds qu'elles contiennent, du fait de l'oxydation des particules métalliques par le front de diffusion de l'acide fluorhydrique.

De manière générale, cet objectif apparaît atteint. On ne note pas de pollution significative de la charge d'acide fluorhydrique avec des cations lourds. Ceci étant, il est possible, toujours selon l'invention, de disposer de l'autre côté de la feuille du matériau selon l'invention, c'est-à-dire à l'opposé de la paroi métallique, une autre couche d'un élastomère formant écran vers la charge d'acide fluorhydrique ; cette autre couche comme précédemment peut être de même nature que l'élastomère du substrat ou matrice de la feuille chargée en métal.

Au cas où la feuille du matériau selon l'invention comporte de part et d'autre deux autres couches respectivement du même ou d'un autre matériau élastomère, on aboutit à un sandwich de protection, constituant le mode de protection le plus élaboré selon l'invention. Ce mode de protection très efficace a l'avantage de fournir les meilleures conditions pour la mise en équilibre ionique, à laquelle on pourrait attribuer l'effet de barrière de diffusion vis-à-vis de l'acide fluorhydrique.

A titre non limitatif, on donne ci-après des exemples de feuilles de matériaux de protection selon la présente invention, lesquelles ont été testées quant à leur effet de barrière vis-à-vis de l'acide fluorhydrique, au moyen de l'appareillage précédemment décrit avec un tube en U.

A partir d'une gomme de caoutchouc butyl fabriquée par ESSOCHEM EUROP Inc. ou par POLYSAR, on prépare cinq mélanges répertoriés : T pour le témoin sans particules métalliques, et Fe - Ni - Zn - Sn pour les mélanges contenant les poudres métalliques respectives, Fer, Nickel, Zinc et Etain.

La composition du témoin T est la suivante :
- 100 parties en poids de caoutchouc butyl
- 90 parties en poids de noir de carbone G.P.F.
- 5 parties en poids du polyéthylène AC 617 A comme "processing aid"
- 5 parties en poids d'oxyde de zinc
et au titre du système de vulcanisation :
- 2 parties en poids de soufre
- 2 parties en poids d'un accélérateur tel que disulfure de tétraméthyl-thiurame.

Les compositions des quatre autres mélanges diffèrent uniquement de celle du témoin T, par l'addition de 80 parties en poids de poudres ou particules métalliques. Elles sont respectivement :
- Mélange Fe : poudre de fer de granulométrie inférieure à 10 micromètres
- Mélange Ni : poudre de nickel de granulométrie inférieure à 60 micromètres
- Mélange Zn : poudre de zinc de granulométrie inférieure à 60 micromètres
- Mélange Sn : poudre d'étain de granulométrie inférieure à 70 micromètres

Les mélanges sont homogénéisés dans un mélangeur interne du type Banbury, et ils sont ensuite extrudés séparément pour la commodité des contrôles. On a fabriqué ainsi des feuilles dites crues et d'épaisseur 1,5 mm, dans lesquelles on a prélevé des échantillons, Ceux-ci ont été soumis au cycle de vulcanisation décrit précédemment en vue des essais de vieillissement.

On a tout d'abord vérifié la compatibilité du témoin selon le test du même nom, et ensuite on a effectué les tests de diffusion sur les cinq feuilles différentes. Les résultats ont été les suivants :

Référence témoin T :

Le pH baisse à partir du 4ème jour, ce qui représente le temps nécessaire pour que le front de diffusion traverse la feuille. Le pH atteint la valeur 2 au 15ème.

Référence Fe :

Le pH atteint 6,2 au trentième jour, puis reste ensuite constant jusqu'à 200 jours, date à laquelle on arrête les mesures.

### Référence Ni :

Le pH descend jusqu'à 5 en 50 jours, et reste ensuite constant.

### Référence-Zn :

Le pH s'abaisse régulièrement jusqu'à 5,5, valeur atteinte en 40 jours ; le pH reste alors constant.

### Référence Sn :

Le pH diminue jusqu'à 3,5 au bout de 50 jours, et n'évolue plus.

On a ensuite fabriqué des feuilles constituées de deux couches, en doublant à la calandre, d'une part deux feuilles témoin l'une sur l'autre, et d'autre part, une feuille témoin sur chacune des feuilles qui contiennent les poudres métalliques. On a ainsi obtenu des feuilles bicouches de 3 mm d'épaisseur, symbolisées par les références abrégées de chaque couche : TT, TFe, TNi, TZn, TSn.

Ces feuilles bicouches ont servi à revêtir des plaques en acier selon la technique employée dans l'ingénierie chimique. On a veillé à ce que pour chaque revêtement la couche T, qui est exempte de poudre métallique, soit bien appliquée contre la surface des plaques en acier. On a ensuite confectionné sur ces revêtements, un deuxième écran à l'aide de feuilles de référence T, et on a pris garde à ce que les raccords ne se superposent pas, ainsi qu'il est d'usage lorsqu'on réalise successivement deux revêtements l'un sur l'autre à partir d'un même support.

On a soumis les plaques ainsi revêtues au même cycle de vulcanisation que précédemment, et pour conclure on a effectué avec ces plaques des essais de vieillissement accéléré dans les solutions d'acide fluorhydrique HF 50 % cristal et HF 70 % cristal.

Après une durée de 250 jours de vieillissement accéléré selon la méthode d'essai dérite précédemment, les revêtements finaux symbolisés par les références abrégées de chacune de leurs couches : TTT, TFeT, TNiT, TZnT, et TSnT, ont été inspectés et les plaques mises à nu.

Avec le revêtement TTT qui ne contient aucune dispersion métallique, on a observé d'importantes dégradations : des boursouflures, des cloques et des décollements. Ceux-ci ont commence à apparaître à partir de 40 jours. Avec les autres revêtements TFeT, TNiT, TZnT, et TSnT qui ont une caractéristique commune, à savoir une feuille élastomère contenant une dispersion de poudre métallique, prise en sandwhich entre deux feuilles d'élastomère butyl, on n'a observe ni altération des revêtements, ni détérioration des plaques métalliques. Enfin, les analyses des cations de métaux lourds dans les solutions d'acide fluorhydrique qui ont été en contact avec ces quatre derniers revêtements sont restées négatives.

Les feuilles des matériaux selon l'invention, simples ou complexes comme décrit précédemment, peuvent être mises en oeuvre de manière traditionnelle. La structure métallique est réalisée indépendamment du revêtement intérieur, selon les techniques de chaudronnerie, et elle est généralement en acier au carbone. Les surfaces à protéger de la structure métallique sont sablées ou grenaillées selon le degré d'aspérité de la surface métallique désirée, puis elles sont revêtues d'une première couche d'un primaire d'adhérence, ensuite d'une colle, et enfin de la feuille du matériau selon l'invention qui fournit le revêtement de protection anticorrosion proprement dit.

Selon un autre mode de réalisation de l'invention, concernant uniquement le complexe formé par la feuille du matériau élastomère chargé de particules métalliques, sur laquelle est collée d'un côté une autre feuille élastomère non chargée, on remplace cette dernière, a titre d'écran par un adhésif, ou une résine thermodurcissable, laquelle peut jouer simultanément les rôles d'adhésif et d'écran. Les adhésifs sont généralement des dissolutions d'élastomères dans des solvants ; les résines thermodurcissables les plus courantes sont les resines epoxy et polyuréthanes présentées, soit sous la forme de bi-composant, soit sous la forme de monocomposant.

## Revendications

1) Appareil destiné à contenir de l'acide fluorhydrique, comportant une paroi métallique, revêtue par un matériau de protection vis-à-vis dudit acide, comprenant un substrat composé par au moins une matière élastomère, caractérisé en ce que des particules d'au moins un métal oxydable par l'acide fluorhydrique ionisé sont dispersées et distribuées dans le substrat.

2) Appareil selon la revendication 1, caractérisé en ce que le métal oxydable a un numéro atomique supérieur à 21 et inférieur à 83.

3) Appareil selon la revendication 2, caractérisé en ce que le métal oxydable est choisi dans les périodes 4, 5 et 6 du tableau périodique des éléments chimiques.

4) Appareil selon la revendication 3, caractérisé en ce que le métal oxydable est choisi dans le groupe comprenant le titane, le vanadium, le chrome, le manganèse, le fer, le colbat, le nickel, le cuivre, le zinc, le zirconium, le molybdène, le cadmium, l'étain, le titane, le plomb.

5) Appareil selon la revendication 1, caractérisé en ce que les particules du métal oxydable ont une granulométrie inférieure à 100 micromètres.

6) Appareil selon la revendication 1, caractérisé en ce que le rapport pondéral métal oxydable/substrat est compris entre 0,1 et 1.

7) Appareil selon la revendication 1, caractérisé en ce que la matière élastomère présente une inertie chimique intrinsèque vis-à-vis de l'acide fluorhydrique.

8) Appareil selon la revendication 1, caractérisé en ce que la matière élastomère est choisie dans le groupe comprenant les caoutchoucs butyl, notamment les caoutchoucs halobutyl, les caoutchoucs de polyéthylène chlorosulfonés, les caoutchoucs chlorés.

9) Appareil selon la revendication 8, caractérisé en ce que la matière élastomère est un caoutchouc butyl.

10) Appareil selon la revendication 1, caractérisé en ce que le matériau élastomère se présente au moins en partie sous la forme d'une feuille rapportée sur la paroi métallique dudit appareil.

11) Appareil selon la revendication 10, caractérisé en ce que, d'un côté de la feuille est associée, sous forme de complexe, une couche d'un élastomère, éventuellement de même nature de l'élastomère du substrat ou matrice de la feuille.

12) Appareil selon la revendication 11, caractérisé en ce que de l'autre côté de la feuille est associée, toujours sous forme de complexe, une autre couche d'un élastomère, éventuellement de même nature que l'élastomère du substrat ou matrice de la feuille.

13) Appareil selon la revendication 1, caractérisé en ce qu'un écran interne est disposé entre la paroi métallique et le matériau de protection, et ledit écran interne consiste en un adhésif, ou une résine thermo-durcissable au contact de la paroi métallique à protéger.

14) Matériau destiné spécifiquement à la protection d'une paroi métallique, vis-à-vis de l'acide fluorhydrique, comprenant un substrat composé par au moins une matière élastomère, caractérisé en ce que des particules d'au moins un métal oxydable par l'acide fluorhydrique ionisé sont dispersées et distribuées dans le substrat.

15) Matériau selon la revendication 14, caractérisé en ce qu'il est présenté sous l'une quelconque des formes suivantes, avec les additifs connus en soi et spécifiques à chaque forme de présentation :
- une forme auto-vulcanisante ;
- une forme prévulcanisée ;
- une forme vulcanisante à la pression de la vapeur d'eau, ou à l'air sec chauffé.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | "Ullmanns Encyklopädie der technischen Chemie", édition 4, vol. 11, 1976, page 602, Verlag Chemie, Weinheim, DE * Page 602, colonne de gauche, avant-dernier paragraphe * --- | | C 08 K 3/08 C 08 L 21/00 C 09 D 5/10 |
| A | FR-A-2 024 359 (BRITISH PETROLEUM) * Revendications 1,8-9 * --- | | |
| A | DE-B-1 156 922 (K. HELMHOLTZ) * Revendication 1 * ----- | | |

| | DOMAINES TECHNIQUES RECHERCHES (Int. Cl.5) |
|---|---|
| | C 08 K C 09 D C 08 L C 01 B |

Le présent rapport a été établi pour toutes les revendications

| Lieu de la recherche | Date d'achèvement de la recherche | Examinateur |
|---|---|---|
| LA HAYE | 10-09-1990 | VAN HUMBEECK F.W.C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant